Europäisches Patentamt

European Patent Office

Office européen des brevets

(19)

(11) Numéro de publication : **0 007 872**

**B1**

(12) **FASCICULE DE BREVET EUROPÉEN**

(45) Date de publication du fascicule du brevet :
03.11.82

(51) Int. Cl.³ : **C 04 B  7/12**, C 04 B 13/00

(21) Numéro de dépôt : 79400527.2

(22) Date de dépôt : 24.07.79

(54) **Béton hydraulique.**

(30) Priorité : 02.08.78 FR 7822778

(43) Date de publication de la demande :
06.02.80 (Bulletin 80/03)

(45) Mention de la délivrance du brevet :
03.11.82 Bulletin 82/44

(84) Etats contractants désignés :
BE CH DE IT NL

(56) Documents cités :
DE A 1 646 959
DE C 877 429
FR A 1 438 540
FR A 2 278 648
NL C 72 187
US A 3 753 620

F.M. Lea, The Chemistry of Cement and
Concrete, 3°. éd. Chemical Publ. Co. Inc. (1971).

(73) Titulaire : Couturier, Jean
7, rue de l'Ermitage
F-78000 Versailles (FR)

(72) Inventeur : Couturier, Jean
7, rue de l'Ermitage
F-78000 Versailles (FR)

(74) Mandataire : Cuer, André
CABINET CUER 30, rue de Léningrad
F-75008 Paris (FR)

Imprimerie Jouve, 18, rue St-Denis, 75001 Paris, France

EP 0 007 872 B1

## Béton hydraulique

La présente invention a trait au domaine de la technologie des bétons et concerne tout spécialement un nouveau béton hydraulique renfermant un liant particulier et à très faible teneur en eau, apte à donner des caractéristiques mécaniques élevées et utilisable tout particulièrement en fondation et pour la construction des chaussées et routes.

Le traitement des sols graveleux ou sableux en assise de chaussées ou de fondations d'ouvrages divers, dans le but de leur conférer une bonne résistance et faire face aux diverses contraintes auxquelles ils sont soumis, pose des problèmes importants en technique routière et dans les travaux publics en général. Les liants hydrauliques habituellement utilisés tels que ciments, chaux, laitiers de haut-fourneaux ou d'aciéries permettent d'obtenir des cohésions finales souvent correctes mais donnent lieu fréquemment à des défauts provenant notamment : soit d'une prise rapide qui se manifeste ensuite par une fissuration importante soit d'une prise trop lente qui ne permet pas l'obtention d'un durcissement correct, en particulier en cas d'intempéries. En outre, dans l'application à la construction de routes, il est généralement nécessaire de prévoir : une couche de fondation, une couche de base de type sol-ciment ou grave-ciment ou encore grave-laitier-chaux, puis une couche de roulement en béton recouverte ensuite d'un enduit bitumineux. Ces séries d'opérations sont coûteuses et exigent la mise en œuvre de nombreux et importants appareillages.

L'invention vise l'obtention d'un béton hydraulique présentant des caractéristiques améliorées quant à la prise du liant. Elle a également pour but de proposer un matériau qui est facile à mettre en œuvre avec de petites machines usuelles de chantier et qui, grâce aux grandes résistances mécaniques obtenues de façon progressive, permet d'éviter les inconvénients susmentionnés et de supprimer, lors de la construction de chaussées, la nécessité classique de couches de base et de revêtements de surface.

Ces buts et d'autres qui apparaîtront au cours de la présente description sont atteints grâce à l'utilisation comme liant, pour la confection d'un béton hydraulique, d'une composition nouvelle de produits en des proportions bien déterminées, et à l'emploi d'une très faible quantité d'eau, près de deux fois inférieure à celle nécessaire pour la fabrication des bétons conventionnels.

Ainsi, selon la caractéristique principale de l'invention, le béton hydraulique renferme comme liant un mélange : de ciment Portland exempt d'ajouts, de type CPA 350 à 500 ; de cendres volantes ; et, éventuellement, d'un activant ou accélérateur de prise des cendres. En outre, la proportion d'eau ajoutée pour la fabrication et l'utilisation du béton est comprise entre 3,5 et 6 %.

Pour obtenir à la fois les meilleures conditions de mise en œuvre et parvenir à d'excellentes caractéristiques mécaniques, il est important de sélectionner les proportions des divers constituants précités entre des fourchettes bien déterminées qui constituent des paramètres critiques. C'est ainsi que le mélange selon l'invention doit comporter, pour 100 parties en poids de liant : 40 à 70 parties de ciment, 20 à 50 parties de cendres volantes et 0 à 15 parties d'activant ou accélérateur de prise. En outre, la quantité de liant utilisée pour la confection du béton doit être maintenue entre 100 et 200 parties, et de préférence 115 à 150 parties, pour 1 000 parties en poids de béton final. Enfin, la proportion d'eau ajoutée est maintenue entre 3,5 et 6 % en poids du béton fini, ce dernier correspondant donc à une formulation « sèche » contrairement aux formulations plastiques ou pâteuses du béton hydraulique conventionnel. En pratique, cette teneur en eau est maintenue à un taux voisin de l'optimum dit « Proctor » conformément au mode opératoire C T 1 « Essai Proctor » recommandé par le Laboratoire Central (français) des ponts et chaussées. Rappelons que cet essai consiste à compacter dans un moule normalisé, à l'aide d'une dame normalisée, l'échantillon du sol à étudier et à déterminer la teneur en eau du sol ainsi que sa densité sèche après compactage ; on répète plusieurs fois les expérimentations sur des échantillons à teneurs en eau croissantes et l'on trace la courbe des densités sèches en fonction des teneurs en eau ; la courbe des points expérimentaux présente un maximum dont l'abscisse correspond à la teneur en eau optimale Proctor et l'ordonnée à la densité sèche maximale Proctor (Publication DUNOD 1970 pages 1 à 35).

On a déjà, certes, étudié l'influence de l'eau dans des bétons (ouvrage de F. M. LEA « The Chemistry of Ciment and Concrete » 3e édition, Chemical Publishing Company Inc, 1971). Toutefois ces études ont été faites sur ces ciments sans pouzzolane ou cendres volantes et d'ailleurs pour des teneurs en eau de plus de 6 % correspondant à des bétons de type plastique (page 392) ; par ailleurs, les propriétés mécaniques des ciments avec pouzzolane s'avèrent moins bonnes que celles des ciments sans ajouts (tableau 79 page 436 de la référence précitée). On ne pouvait donc pas prévoir les excellents résultats obtenus avec les compositions de béton « sec » selon l'invention.

En pratique, les cendres volantes utilisées sont celles issues de la combustion du charbon pulvérisé dans les centrales thermiques, comme par exemple les cendres de houille pouzzolaniques ou encore des cendres de lignites. Par ailleurs, ont peut employer comme activant, pour accélérer la prise de telles cendres, des produits tels que de la chaux éteinte, du gypse, des silices activées ou analogues.

Les granulats utilisés comme charges pour le béton selon l'invention sont choisis de façon que la courbe des diamètres moyens de grains soit généralement comprise entre 0 et 25, de façon continue ou discontinue (rappelons que l'unité de grosseur des grains est exprimée, selon les conventions, en millimètres).

**0 007 872**

L'invention sera mieux comprise par la description d'exemples de réalisation, non limitatifs, concernant diverses formulations à base du nouveau liant, étudiées comparativement à des formulations de types connus.

Exemples 1 à 6

On a confectionné une série de bétons hydrauliques à partir de diverses charges et en utilisant comme liant soit du ciment seul soit un mélange de ciment et de cendres volantes éventuellement additionné d'activant (ici une silice activée). Le ciment était du type Portland CPA 400.

Les formulations étaient soit du type « plastiques » c'est-à-dire avec une quantité d'eau correspondant à la normale pour les bétons classiques (exemples nᵒˢ 1, 2 et 3) soit de catégorie « sèches», à savoir pauvres en eau de gâchage ; dans ce dernier cas l'exemple nᵒ 4 correspond à un béton connu, récemment apparu sur le marché, alors que les exemples nᵒˢ 5 et 6 correspondent à des bétons hydrauliques conformes à l'invention.

Le tableau 1, en fin de description, fournit la liste et les proportions des principaux constituants mis en œuvre. Il est en outre accompagné des résultats d'évaluation des propriétés mécaniques des bétons obtenus selon les divers exemples après plusieurs périodes de temps. Comme on peut le voir, les bétons obtenus selon l'invention (exemples 5 et 6) possèdent, dès le délai de 28 jours passé, des résistances à la traction élevées qui répondent aux prescriptions du Ministère de l'Equipement pour les chaussées béton. A partir du délai de 90 jours, ces résistances sont supérieures à celles manifestées par les bétons classiques.

Cette amélioration des propriétés mécaniques, jointe à la facilité de manipulation et de mise en œuvre des mélanges ainsi qu'à la possibilité de travailler avec des matériels simples (nivelleuse, compacteur à pneus, sans coffrage) et de supprimer la réalisation de joints , contribuent à faire des bétons hydrauliques selon l'invention des matériaux de choix pour la construction de chaussées. On peut en effet envisager l'application d'une seule couche sur la chaussée, avec éventuellement un simple enduit superficiel, en économisant ainsi une couche de fondation et l'application d'épais et coûteux revêtements à base de liants hydrocarbonés.

Bien entendu, l'invention n'est pas limitée aux modes de réalisation susdécrits et s'étend à tous les moyens équivalents selon la portée juridique telle que définie dans les revendications qui suivent. Par exemple, il est possible de mettre en œuvre du ciment Portland avec ajout, à la condition d'introduire la quantité de chaux supplémentaire nécessaire pour saturer chimiquement les cendres volantes.

Tableau 1

| Exemples Nᵒ | 1 | | 2 | | 3 | | 4 | | 5 | | 6 | |
|---|---|---|---|---|---|---|---|---|---|---|---|---|
| Constituants | Poids (kg) | % | Poids (kg) | % | Poids (kg) | % | Poids (kg) | % | Poids (kg) | % | Poids (kg) | % |
| Gravillons 12/25 | 805 | 35 | 785 | 35 | 785 | 35 | 1 247 | 52 | 1 200 | 52 | 1 220 | 52 |
| Gravillons 6/10 | 345 | 15 | 340 | 15 | 340 | 15 | | | | | | |
| Sable 0/3 | 200 | 8,75 | 200 | 8,75 | 200 | 8,75 | 211 | 8,75 | 201 | 8,75 | 205 | 8,75 |
| Sable roulé 0/5 | 595 | 26 | 580 | 26 | 580 | 26 | 630 | 26,25 | 606 | 26,25 | 616 | 26,25 |
| Ciment | 330 | 13 | 198 | 13 | 165 | 13 | 312 | 13 | 180 | 13 | 153 | 13 |
| Cendres volantes | | | 132 | | 132 | | | | 120 | | 122 | |
| Silice activée | | | | | 33 | | | | | | 30 | |
| Eau (litres) | 150 | | 170 | | 170 | | 93 | 4 | | 4,3 | | 4,4 |

Caractéristiques Mécaniques. Essais de traction par fendage
selon norme AFNOR : P 18408 (février 1969)
résistance à la traction : 2 P/πDL en kg/cm²* (1) ou mégapascal MPa (2)

| Essais effectués après : | (1) | (2) | (1) | (2) | (1) | (2) | (1) | (2) | (1) | (2) | (1) | (2) |
|---|---|---|---|---|---|---|---|---|---|---|---|---|
| 7 jours | 31,5 | 3,2 | 16,5 | 1,7 | 13 | 1,3 | 42 | 4,3 | 23 | 2,3 | 30 | 3 |
| 28 jours | 40 | 4 | 26 | 2,6 | 22 | 2,2 | 46 | 4,7 | 38 | 3,9 | 43 | 4,4 |
| 90 jours | 44 | 4,5 | 37,5 | 3,8 | 35 | 3,6 | 49 | 5 | 54 | 5,5 | 55 | 5,6 |
| 1 an | 47 | 4,8 | 52 | 5,3 | 54 | 5,5 | 51 | 5,2 | 62 | 5,3 | 65 | 6,6 |

* Nota : P = charge de rupture en kg ; D = diamètre de l'éprouvette en cm ; L = longueur éprouvette en cm.

**Revendications**

1. Béton hydraulique, spécialement apte à la réalisation de fondations et de chaussées en se substituant aux couches différentes conventionnelles de fondation et revêtement, du type comportant des charges granulaires, un ciment et des cendres volantes jouant le rôle de liant, ce béton étant caractérisé en ce qu'il comporte un mélange, préparé extemporanément, contenant pour 1 000 parties (poids) de béton final : 100 à 200 parties (poids) de liant constitué, pour 100 parties en poids, par : 40 à 70 parties de ciment Portland sans ajout choisi dans le groupe CPA 350 à 500 ; 20 à 50 parties de cendres volantes ; éventuellement jusqu'à 15 parties d'accélérateur de prise des cendres ; et une proportion d'eau totale comprise entre 3,5 et 6 % du poids de béton fini.

2. Béton selon la revendication 1, caractérisé en ce que la quantité de liant est comprise entre 115 et 150 parties (poids) pour 1 000 parties de béton.

**Claims**

1. Hydraulic concrete, particularly fitted for the realization of foundations and pavements by substitution for various conventional layers of foundations and coating, of type comprising granular fillers, a cement and fly ash acting as binder, this concrete being characterized by the fact it comprises a mixture, prepared extemporarily, containing for 1 000 parts (weight) of finished concrete : 100 to 200 parts (weight) of binder constituted, for 100 parts weight, by : 40 to 70 parts of Portland cement without addition selected on the group constituted by CPA 350 to 500 ; 20 to 50 parts of fly ashes ; possibly up to 15 parts of an setting activer for ashes ; and a total quantity of water comprised between 3,5 and 6 % of final concrete in weight.

2. Concrete recording the claim 1, wherein the binder ratio is comprised between 115 and 150 parts (weight) for 1 000 parts of concrete.

**Ansprüche**

1. Hydraulisch Beton, besonders geeignet zu durchführung von Grundlagen und Strassen als Ersatz von übliche Lagern von Fundierung und Verkleidung, bestehend aus körnig Füllstoffe, ein Zement und fliegende Asche sich benehmende als Binder, dadurch gekennzeichnet dass der Beton enthält ein Mischung, sofort hergestellt, für 1 000 Teilen (gewicht) von Endbeton : 100 bis 200 Teilen (gewicht) von Binder dargestellt, für 100 gewicht Teilen, von : 40 bis 70 Teilen von Portland Zement ohne Zusatz ausgewählt unter CPA Zement 350 bis 500 ; 20 bis 50 Teilen von fliegende Asche ; gegebenenfalls bis 15 Teilen von Prise Beschleuniger für Aschen ; und ein gesamt Wasser verhältnis von 3,5 bis 6 % in bezug auf Gewicht von Endbeton.

2. Hydraulisch Beton gemäss Anspruch 1, dadurch gekennzeichnet, dass das Binder Verhältnis ist umgefasst zwischen 115 bis 150 Teilen (gewicht) für 100 Teilen von Beton.